# EUROPÄISCHE PATENTANMELDUNG

(11) **EP 3 594 466 A1**
(43) Veröffentlichungstag der Anmeldung: **15.01.2020**
(21) Anmeldenummer: 19178660.7
(22) Anmeldetag: 06.06.2019
(51) Int. Cl.: F01P 7/10, B60K 11/08, F01P 3/18

(54) **KÜHLSYSTEM FÜR EIN KRAFTFAHRZEUG MIT ABDECKVORRICHTUNGEN ZUR BEEINFLUSSUNG DER KÜHLLUFTZUFUHR ZU KÜHLMITTELKÜHLERN**

(30) Priorität: 10.07.2018 DE 102018211425
(71) Anmelder: Volkswagen AG, 38440 Wolfsburg (DE)
(72) Erfinder: Stürwold, Wido, 38106 Braunschweig (DE); Braunhardt, Marc, 31234 Edemissen (DE)

(57) **Zusammenfassung**

Ein Kühlsystem für ein Kraftfahrzeug weist eine erste Kühlkreisanordnung (7), die einen ersten Kühlmittelkühler (9) umfasst, und eine zweite Kühlkreisanordnung (8), die einen zweiten Kühlmittelkühler (10) umfasst, auf. Eine Kühlluftzufuhr zu dem ersten Kühlmittelkühler (9) ist mittels einer ersten Abdeckvorrichtung (13) und eine Kühlluftzufuhr zu dem zweiten Kühlmittelkühler (10) ist mittels einer zweiten Abdeckvorrichtung (14) veränderbar. Die erste Abdeckvorrichtung (13) und die zweite Abdeckvorrichtung (14) sind unter Zwischenschaltung eines Getriebes (20) von einem gemeinsamen Antrieb (19) bewegbar, wobei das Getriebe (20) derart ausgebildet ist, dass bei einem Öffnungsbetrieb des Antriebs (19) die zweite Abdeckvorrichtung (14) früher und/oder schneller als die erste Abdeckvorrichtung (13) von einer Verschlussstellung in Richtung einer Öffnungsstellung bewegt wird. Dadurch wird ermöglicht, einen bereits bestehenden Kühlbedarf des zweiten Kühlmittelkühlers (10) durch ein Zuführen von Kühlluft zu decken, während ein solcher Kühlbedarf für den ersten Kühlmittelkühler (9) noch nicht besteht und dieser daher noch mittels der zugeordneten (ersten) Abdeckvorrichtung (13) hinsichtlich einer Kühlluftströmung abgedeckt verbleiben kann. Letzteres kann sich positiv hinsichtlich des Strömungswiderstands für die Kühlluft und damit für die Aerodynamik des Kraftfahrzeugs auswirken

## Beschreibung

Die Erfindung betrifft ein Kühlsystem für ein Kraftfahrzeug sowie ein Kraftfahrzeug mit einem solchen Kühlsystem.

Ein Kraftfahrzeug weist in der Regel ein Kühlsystem auf, in dem ein flüssiges Kühlmittel mittels einer oder mehrerer Kühlmittelpumpen in mindestens einem Kühlkreis gefördert wird und dabei Wärmeenergie von in den Kühlkreis integrierten Komponenten, beispielsweise von einem Verbrennungsmotor einer Brennkraftmaschine des Kraftfahrzeugs, aufnimmt. Diese Wärmeenergie wird, sofern ein Betriebstemperaturbereich der Brennkraftmaschine bereits erreicht wurde, anschließend in mindestens einem Kühlmittelkühler sowie gegebenenfalls zeitweise in einem Heizungswärmetauscher an Umgebungsluft, im Fall des Heizungswärmetauschers an zur Klimatisierung eines Innenraums des Kraftfahrzeugs vorgesehene Umgebungsluft, übertragen.

Brennkraftmaschinen, die zum Antrieb von Kraftfahrzeugen vorgesehen sind, werden üblicherweise aufgeladen, um die spezifische Leistung zu erhöhen und den spezifischen Kraftstoffverbrauch zu senken. Weit verbreitet ist eine Aufladung von Brennkraftmaschinen mittels eines oder mehrerer Abgasturbolader. Diese umfassen eine Turbine mit einem Turbinenlaufrad, das von Abgas, das von einem Verbrennungsmotor der Brennkraftmaschine ausgestoßen wurde, angeströmt und dadurch drehend angetrieben wird. Das Turbinenlaufrad treibt über eine Welle ein Verdichterlaufrad eines Verdichters an, der in einen Frischgasstrang des Verbrennungsmotors integriert ist und dadurch das Frischgas verdichtet. Alternativ kann ein solcher Verdichter auch mittels eines anderen Antriebs, beispielsweise von dem Verbrennungsmotor selbst oder von einem elektrischen Antriebsmotor, angetrieben werden. Durch die Verdichtung kann u.a. die Menge des in die Brennräume des Verbrennungsmotors eingebrachten Frischgases und damit die Menge des in einem Arbeitsspiel in dem Brennraum umsetzbaren Kraftstoffs erhöht werden. Gleichzeitig wird jedoch durch die Verdichtung die Temperatur und damit das spezifische Volumen des verdichteten Frischgases erhöht, was der durch die Verdichtung beabsichtigten Erhöhung der Füllung der Brennräume entgegenwirkt. Um dies zu vermeiden, wird üblicherweise in den Frischgasstrang stromab des Verdichters ein Ladeluftkühler integriert, der eine zumindest teilweise Rückkühlung des durch die Verdichtung erwärmten Frischgases (Ladeluft) bewirkt. Ein solcher Ladeluftkühler kann auch in das Kühlsystem des Kraftfahrzeugs integriert sein, so dass dessen Kühlwirkung auf einem Wärmeübergang von dem Frischgas auf Kühlmittel des Kühlsystems, das den Ladeluftkühler durchströmt, beruht (vgl. US 7,464,700 B2 oder US 7,290,593 B2).

Bekannt ist, die mittels eines Kühlsystems zu kühlenden Komponenten eines Kraftfahrzeugs in unterschiedliche Kühlkreisanordnungen, die jeweils einen Kühlmittelkühler umfassen, zu integrieren. Diese Kühlkreisanordnungen können sich dabei insbesondere auch hinsichtlich der vorgesehenen Temperatur des Kühlmittels im Betrieb unterscheiden. Beispielsweise kann die Betriebstemperatur des Kühlmittels in einer Kühlkanäle eines Verbrennungsmotors umfassenden (Hochtemperatur-)Kühlkreisanordnung deutlich höher ausgelegt werden als die Betriebstemperatur des Kühlmittels in einer einen Ladeluftkühler umfassenden (Niedertemperatur-)Kühlkreisanordnung.

Der oder die Kühlmittelkühler eines Kühlsystems eines Kraftfahrzeugs sind üblicherweise hinter einem Kühlerschutzgitter, das Teil der Karosserie des Kraftfahrzeugs ist, in einem Motorraum des Kraftfahrzeugs angeordnet. Umgebungsluft, die durch das Kühlerschutzgitter in den Motorraum eingetreten ist, durchströmt den oder die Kühlmittelkühler, wodurch eine Rückkühlung von Kühlmittel in dem oder den Kühlmittelkühlern bewirkt wird. Diese Kühlluft durchströmt anschließend weitere Abschnitte des Motorraums und wird an einer oder mehreren Stellen aus dem Motorraum wieder abgeführt. Diese Durchströmung des oder der Kühlmittelkühler und des Motorraums führt zu einem relativ hohen Strömungswiderstand und damit zu einer relativ schlechten Aerodynamik des Kraftfahrzeugs, was sich negativ auf den Energieverbrauch (insbesondere Kraftstoffverbrauch), der für den Fahrbetrieb des Kraftfahrzeugs erforderlich ist, auswirkt.

Da der oder die Kühlmittelkühler eines Kühlsystems eines Kraftfahrzeugs regelmäßig nur zeitweise und dann in unterschiedlichem Maße einen Kühlbedarf aufweisen, der unter Nutzung von durch ein Kühlerschutzgitter zu dem/den Kühlmittelkühler(n) geführter Umgebungsluft gedeckt werden muss, kann ein solches Kraftfahrzeug eine häufig als Kühlerjalousie bezeichnete Abdeckvorrichtung umfassen, mittels der die Durchgangsöffnungen in dem Kühlerschutzgitter bedarfsweise abdeckbar sind. Im geschlossenen Zustand verhindert eine solche Abdeckvorrichtung dann im Wesentlichen ein Einströmen von Umgebungsluft durch das Kühlerschutzgitter in den Motorraum und damit den mit der Durchströmung des oder der Kühlmittelkühler und des Motorraums verbundenen Strömungswiderstand (vgl. DE 10 2015 109 229 A1).

Bei einem Kühlsystem eines Kraftfahrzeugs mit zwei Kühlmittelkühlern kann sich der Kühlbedarf, der unter Nutzung von durch ein Kühlerschutzgitter zu dem/den Kühlmittelkühler (n) geführter Umgebungsluft gedeckt werden muss, für die zwei Kühlmittelkühler sowohl zeitlich als auch hinsichtlich des Umfangs unterscheiden. Bei einem solchen Kraftfahrzeug können zwei Abdeckvorrichtungen vorgesehen werden, die den entsprechenden Abschnitten des Kühlerschutzgitters, hinter denen die einzelnen Kühlmittelkühler angeordnet sind, zugeordnet sind und die unabhängig voneinander verstellbar sind. Dies ist jedoch mit einem relativ hohen konstruktiven und damit Kostenaufwand verbunden.

Die US 2013/0149119 A1 beschreibt zwei Kühlmittelkühler für ein Kühlsystem eines Kraftfahrzeugs, die in einer Einheit kombiniert sind.

Die WO 2009/087106 A1 offenbart einen Wärmetauscher, der als Kühlmittelkühler eines Kühlsystems eines Kraftfahrzeugs eingesetzt werden kann und in den ein elektrisches Heizmodul zur Luftstromerwärmung integriert ist.

Der Erfindung lag die Aufgabe zugrunde, bei einem Kühlsystem für ein Kraftfahrzeug, das mindestens zwei Kühlmittelkühler umfasst, denen jeweils eine Abdeckvorrichtung zugeordnet ist, um eine Kühlluftzufuhr zu diesen zu beeinflussen, auf möglichst einfache Weise eine unterschiedliche Verstellung dieser Abdeckvorrichtungen zu realisieren

Diese Aufgabe wird mittels eines Kühlsystems gemäß dem Patentanspruch 1 gelöst. Ein Kraftfahrzeug mit einem solchen Kühlsystem ist Gegenstand des Patentanspruchs 11. Vorteilhafte Ausgestaltungen des erfindungsgemäßen Kühlsystems und damit des erfindungsgemäßen Kraftfahrzeugs sind Gegenstände der weiteren Patentansprüche und/oder ergeben sich aus der nachfolgenden Beschreibung der Erfindung.

Ein erfindungsgemäßes Kühlsystem für ein Kraftfahrzeug weist eine erste Kühlkreisanordnung, die einen ersten Kühlmittelkühler umfasst, und eine zweite Kühlkreisanordnung, die einen zweiten Kühlmittelkühler umfasst, auf. Eine Kühlluftzufuhr zu dem ersten Kühlmittelkühler ist mittels einer ersten Abdeckvorrichtung und eine Kühlluftzufuhr zu dem zweiten Kühlmittelkühler ist mittels einer zweiten Abdeckvorrichtung veränderbar. Dabei ist vorgesehen, dass die erste Abdeckvorrichtung und die zweite Abdeckvorrichtung unter Zwischenschaltung eines Getriebes von einem gemeinsamen Antrieb, beispielsweise einem Elektromotor oder einem elektrischen, hydraulischen oder pneumatischen Linearsteller, bewegbar sind. Das Getriebe ist dabei derart ausgebildet, dass bei einem Öffnungsbetrieb des Antriebs, d.h. bei einer Ansteuerung des Antriebs derart, dass dieser die Abdeckvorrichtungen jeweils von einer Verschlussstellung in Richtung einer Öffnungsstellung bewegt, die zweite Abdeckvorrichtung früher und/oder schneller als die erste Abdeckvorrichtung von der jeweiligen Verschlussstellung, in der diese eine Kühlluftzufuhr zu dem jeweils zugeordneten Kühlmittelkühler relativ weitgehend und insbesondere weitestmöglich versperren, in Richtung der jeweiligen Öffnungsstellung, in der diese eine Kühlluftzufuhr zu dem jeweils zugeordneten Kühlmittelkühler relativ wenig und insbesondere so wenig wie möglich versperren, bewegt (vorzugsweise gedreht) wird.

Die Abdeckvorrichtungen sind demnach erfindungsgemäß derart über das Getriebe miteinander gekoppelt, dass durch die Wirkung eines für beide Abdeckvorrichtungen gemeinsam vorgesehenen Antriebs die zweite Abdeckvorrichtung bereits zumindest ein Stück weit geöffnet werden kann, während die erste Abdeckvorrichtung noch in der Verschlussstellung verbleibt, oder die zweite Abdeckvorrichtung zumindest in einem ersten zeitlichen Abschnitt des Öffnungsbetriebs des Antriebs schneller und damit weiter als die erste Abdeckvorrichtung geöffnet wird. Da das erfindungsgemäße Kühlsystem weiterhin bevorzugt derart ausgebildet ist, dass mittels des Antriebs (ggf. stufenlos) eine Mehrzahl von Zwischenstellungen einstellbar sind, die zwischen einer ersten (Antriebs-)Stellung des Antriebs, in der sich die Abdeckvorrichtungen in der Verschlussstellung befinden, und einer zweiten Antriebsstellung, in der sich die Abdeckvorrichtungen in den Öffnungsstellungen befinden, liegen, wird durch die erfindungsgemäße Ausgestaltung eines Kühlsystems ermöglicht, einen bereits bestehenden Kühlbedarf des zweiten Kühlmittelkühlers durch ein Zuführen von Kühlluft zu decken, während ein solcher Kühlbedarf für den ersten Kühlmittelkühler noch nicht besteht und dieser daher noch mittels der zugeordneten (ersten) Abdeckvorrichtung hinsichtlich einer Kühlluftströmung abgedeckt verbleiben kann. Letzteres kann sich entsprechend positiv hinsichtlich des Strömungswiderstands für die Kühlluft und damit für die Aerodynamik eines erfindungsgemäßen Kraftfahrzeugs auswirken.

Ein solches Kraftfahrzeug umfasst zumindest ein erfindungsgemäßes Kühlsystem. Vorzugsweise kann vorgesehen sein, dass die Kühlmittelkühler dabei hinter einem gegebenenfalls mehrteiligen Kühlerschutzgitter des Kraftfahrzeugs angeordnet sind und Durchgangsöffnungen des Kühlerschutzgitter mittels der Abdeckvorrichtungen des Kühlsystems verschließbar sind. Dabei können die Abdeckvorrichtungen auf der von den Kühlmittelkühlern abgewandten Seite des Kühlerschutzgitters oder zwischen dem Kühlerschutzgitter und den Kühlmittelkühlern angeordnet sein. Auch können die Abdeckvorrichtungen in das Kühlerschutzgitter integriert sein oder selbst das Kühlerschutzgitter ausbilden, indem jede von diesen beispielsweise eine Mehrzahl von Jalousielamellen umfasst, die gemeinsam mittels des Antriebs bewegbar sind.

Ein erfindungsgemäßes Kühlsystem kann vorzugsweise derart ausgebildet sein, dass bei einem Schließbetrieb des Antriebs, d.h. bei einer Ansteuerung des Antriebs derart, dass dieser die Abdeckvorrichtungen jeweils bis in die Verschlussstellung bewegt, die zweite Abdeckvorrichtung später als die erste Abdeckvorrichtung die jeweils dazugehörige Verschlussstellung erreicht. Dadurch kann erreicht werden, dass die erste Abdeckvorrichtung bereits wieder zur Erzielung einer vorteilhaften Aerodynamik eines erfindungsgemäßen Kraftfahrzeugs verschlossen ist, während ein Kühlbedarf des zweiten Kühlmittelkühler noch durch ein Zuführen von Kühlluft infolge der noch zumindest teilweise geöffneten zweiten Abdeckvorrichtung gedeckt werden kann.

Die Kühlkreisanordnungen eines erfindungsgemäßen Kühlsystems können separiert voneinander ausgebildet sein, wodurch sich ein zeitlich unterschiedlicher Beginn eines Kühlbedarfs zur Rückkühlung des jeweils darin geführten (vorzugsweise flüssigen) Kühlmittels ergeben kann. Als "separierte" Ausbildung der Kühlkreisanordnungen wird dabei verstanden, dass diese keinen integralen Abschnitt, d.h. keinen Abschnitt, der sowohl Teil der ersten Kühlkreisanordnung als auch der zweiten Kühlkreisanordnung ist, umfassen. Es findet folglich im Wesentlichen kein Austausch von Kühlmittel zwischen den zwei Kühlkreisanordnungen statt. Die separierten Kühlkreisanordnungen können jedoch mit einem gemeinsamen Ausgleichsbehälter, insbesondere über jeweils mindestens eine Ausgleichsleitung sowie jeweils mindestens eine Entlüftungsleitung, indirekt verbunden sein. Als "Ausgleichsbehälter" wird dabei ein Reservoir für das Kühlmittel des Kühlsystems verstanden, das dazu dient, insbesondere temperaturbedingte Ausdehnungen des Kühlmittels durch eine Veränderung des Füllstands des Kühlmittels in dem Ausgleichsbehälter auszugleichen. Dazu kann ein solcher Ausgleichsbehälter insbesondere teilweise mit dem Kühlmittel und teilweise mit einem Gas, insbesondere Luft, gefüllt sein. Eine dazugehörige Entlüftungsleitung kann vorzugsweise in einen Abschnitt des Ausgleichsbehälters münden, in dem das Gas vorhanden ist, während eine dazugehörige Ausgleichsleitung in einen das Kühlmittel aufnehmenden Abschnitt mündet, um ein Überströmen von Kühlmittel zwischen den Teilkühlsystemen und dem Ausgleichsbehälter mit dem primären Ziel der Kompensation einer temperaturbedingten Ausdehnung des Kühlmittels, gegebenenfalls auch für ein erstmaliges oder im Rahmen von Wartungstätigkeiten vorgesehenes Befüllen der Kühlsysteme mit dem Kühlmittel, zu ermöglichen.

Durch die Separierung der Kühlkreisanordnungen wird insbesondere ermöglicht, unterschiedliche Betriebstemperaturbereiche für das Kühlmittel in den verschiedenen Kühlkreisanordnungen vorzusehen. Als "Betriebstemperatur" des Kühlmittels wird dabei eine Temperatur verstanden, die gegebenenfalls nach einer Aufheizphase nach einer Inbetriebnahme des Kühlsystems erreicht wird und die für einen fehlerfreien Dauerbetrieb des Kühlsystems vorgesehen ist. Insbesondere kann die erste Kühlkreisanordnung als Hochtemperatur-Kühlkreisanordnung und die zweite Kühlkreisanordnung als Niedertemperatur-Kühlkreisanordnung ausgelegt sein, indem der Betriebstemperaturbereich, der für das in der Hochtemperatur-Kühlkreisanordnung strömende Kühlmittel vorgesehen ist, höher ausgelegt ist als der Betriebstemperaturbereich, der für das in der Niedertemperatur-Kühlkreisanordnung strömende Kühlmittel vorgesehen ist.

Vorzugsweise umfasst die erste Kühlkreisanordnung einen Verbrennungsmotor beziehungsweise Kühlkanäle in einem solchen Verbrennungsmotor, insbesondere in einem Zylinderkopf und/oder in einem Zylindergehäuse eines solchen Verbrennungsmotors. Weiterhin bevorzugt kann die zweite Kühlkreisanordnung einen Ladeluftkühler umfassen, der der Kühlung von dem Verbrennungsmotor zuzuführendem, verdichtetem Frischgas (Ladeluft) dient, das anschließend in einem oder mehreren Brennräumen des Verbrennungsmotors zusammen mit Kraftstoff verbrannt wird, um mittels des Verbrennungsmotors Antriebsleistung zu erzeugen. Hierfür kann eine Brennkraftmaschine, neben u.a. dem Verbrennungsmotor, auch einen Frischgasstrang umfassen, über den dem Verbrennungsmotor Frischgas zuführbar ist, wobei in den Frischgasstrang ein Verdichter zur Verdichtung des Frischgases und zwischen dem Verdichter und dem Verbrennungsmotor zudem der Ladeluftkühler integriert sind. Der Verdichter kann dabei insbesondere Teil eines Abgasturboladers sein, der weiterhin eine Abgasturbine umfasst, die in einen Abgasstrang der Brennkraftmaschine integriert ist. Über den Abgasstrang kann Abgas, das bei der Verbrennung von Frischgas-Kraftstoff-Gemischmengen in dem oder den Brennräumen des Verbrennungsmotors erzeugt wurde, abgeführt werden. Ein durch einen solchen Abgasstrom drehend angetriebenes Turbinenlaufrad der Abgasturbine ist drehantreibend mit einem Verdichterlaufrad des Verdichters verbunden, um Verdichtungsleistung bereitzustellen.

Für einen Verbrennungsmotor einerseits und einen Ladeluftkühler andererseits kann eine Kühlung mit unterschiedlichen Kühlmittelmengen, die unterschiedliche Betriebstemperaturbereiche aufweisen, sinnvoll sein, was die Integration in unterschiedliche Kühlkreisanordnungen eines erfindungsgemäßen Kühlsystems vorteilhaft macht. Gleichzeitig kann ein Ladeluftkühler früher als ein Verbrennungsmotor einen Kühlbedarf für das diesen durchströmende Kühlmittel erforderlich machen, der durch eine Zufuhr von Kühlluft zu dem dazugehörigen Kühlmittelkühler gedeckt werden muss. Demnach ist die vorzugsweise vorgesehene Integration des Ladeluftkühlers in die zweite Kühlkreisanordnung, deren Kühlmittelkühler früher und/oder schneller in einem relativ großen Maße von der zugehörigen (zweiten) Abdeckvorrichtung freigegeben wird, sinnvoll.

Durch eine Ausgestaltung eines erfindungsgemäßen Kühlsystems, die dadurch gekennzeichnet ist, dass die Abdeckvorrichtungen in einer ersten Antriebsstellung des Antriebs vollständig geschlossen und in einer zweiten Antriebstellung vollständig geöffnet sind, kann sichergestellt werden, dass trotz des zeitlich versetzten Beginns und/oder der unterschiedlichen Geschwindigkeiten der Öffnungsbewegungen der Abdeckvorrichtungen bei einem Öffnungsbetrieb des Antriebs in den Verschlussstellungen eine weitestmögliche Versperrung einer Kühlluftzufuhr zu beiden Kühlmittelkühlern und in den Öffnungsstellungen eine geringstmögliche Versperrung der Kühlluftzufuhr erreicht wird. Um dies zu realisieren kann grundsätzlich vorgesehen sein, dass der Weg beziehungsweise Winkel über dem/den die erste Abdeckvorrichtung bewegt werden muss, um zwischen der Verschlussstellung und der Öffnungsstellung verstellt zu werden, kleiner ist als der entsprechende Weg/Winkel, über dem/den die zweite Abdeckvorrichtung bewegt werden muss. Vorzugsweise ist jedoch vorgesehen, dass diese Wege/Winkel gleich sind beziehungsweise dass die Abdeckvorrichtungen jeweils zwischen der Verschlussstellung und der Öffnungsstellung über dieselbe (Weg- oder Winkel-)Distanz bewegbar sind, was durch eine geeignete Ausgestaltung des Getriebes realisiert werden kann.

Beispielsweise kann bei einem erfindungsgemäßen Kühlsystem, bei dem das Getriebe derart ausgebildet ist, dass bei einem Öffnungsbetrieb des Antriebs die zweite Abdeckvorrichtung früher als die erste Abdeckvorrichtung von einer Verschlussstellung in Richtung einer Öffnungsstellung bewegt wird, die Geschwindigkeit der Öffnungsbewegung der zweiten Abdeckvorrichtung kleiner als die Geschwindigkeit der später einsetzenden Öffnungsbewegung der ersten Abdeckvorrichtung ausgelegt sein, so dass die vollständig geöffneten Stellungen der beiden Abdeckvorrichtungen gleichzeitig in der entsprechenden (zweiten) Antriebsstellung des Antriebs erreicht werden.

Ergänzend oder alternativ kann vorgesehen sein, dass das Getriebe derart ausgebildet ist, dass bei einem Öffnungsbetrieb des Antriebs die zweite Abdeckvorrichtung die dazugehörige Öffnungsstellung früher als die erste Abdeckvorrichtung erreicht. Die erste Abdeckvorrichtung kann demnach, nachdem die zweite Abdeckvorrichtung bereits seine Öffnungsstellung erreicht hat, mittels des Antriebs noch weiter bewegt werden, bis auch diese in der zweiten Antriebstellung ihre Öffnungsstellung erreicht. Eine solche temporäre Entkopplung der Bewegungen der Abdeckvorrichtungen zum Ende des Öffnungsbetriebs des Antriebs kann beispielsweise durch eine Integration einer Rutschkupplung realisiert werden, die durchrutscht, sobald die zweite Abdeckvorrichtung bei noch andauerndem Öffnungsbetrieb des Antriebs die Öffnungsstellung erreicht hat.

Das Getriebe eines erfindungsgemäßen Kühlsystems kann vorzugsweise eine oder mehrere Kuppelstangen und/oder Kuppelseile umfassen, wodurch eine in konstruktiver Hinsicht besonders einfache Ausgestaltung für das Getriebe eines erfindungsgemäßen Kühlsystems realisiert werden kann. Eine früher einsetzende Bewegung der zweiten Abdeckvorrichtung bei einem Öffnungsbetrieb des Antriebs kann dann in vorteilhafter Weise realisiert werden, wenn mindestens zwei Kuppelstangen vorgesehen sind, die drehbar miteinander verbunden sind, wobei die Längsachsen der Kuppelstangen in den Verschlussstellungen der Abdeckvorrichtungen nicht parallel ausgerichtet sind. Zu Beginn des Öffnungsbetriebs werden solche drehbar miteinander verbundenen, nicht parallel ausgerichteten Kuppelstangen zunächst in eine parallele Ausrichtung gebracht, während dessen eine Bewegung der zweiten Abdeckvorrichtung noch nicht über diese Kuppelstangen auf die erste Abdeckvorrichtung übertragen wird. Erst nach einer solchen parallelen und insbesondere koaxialen Ausrichtung der Kuppelstangen können diese als Zug- oder Druckmittel wirken, um eine Bewegung der zweiten Abdeckvorrichtung dann auf die erste Abdeckvorrichtung zu übertragen.

Ergänzend oder alternativ dazu kann die oder zumindest eine der Kuppelstangen teleskopierbar ausgestaltet sein, so dass zu Beginn des Öffnungsbetriebs die teleskopierbare Kuppelstange zunächst verlängert oder verkürzt wird, bevor eine Bewegung der zweiten Abdeckvorrichtung auf die erste Abdeckvorrichtung übertragen wird.

Wiederum ergänzend oder alternativ kann ein Kuppelseil des Getriebes eines erfindungsgemäßen Kühlsystems in den Verschlussstellungen der Abdeckvorrichtungen ungespannt zwischen zwei Anlenkstellen (Stellen, an den dieses mit weiteren Komponenten des Getriebes verbunden ist) verläuft. Das Kuppelseil kann dabei steif ausgebildet sein, so dass sich dieses bei seiner Ausübung als Funktion des Getriebes nicht in einem relevanten Maße (elastisch oder unelastisch) längt. In diesem Fall kann das Kuppelseil in einer oder mehreren Bögen liegen, solange sich die Abdeckvorrichtungen noch in den Verschlussstellungen befinden. Eine Bewegung der zweiten Abdeckvorrichtung führt dann zunächst zu einem Spannen des Kuppelseils, bevor dieses die Bewegung der zweiten Abdeckvorrichtung auf die erste Abdeckvorrichtung überträgt. Alternativ kann das Kuppelseil elastisch oder unelastisch (beispielsweise durch eine entsprechende Flechtung) verlängerbar ausgebildet sein, so dass eine Bewegung der zweiten Abdeckvorrichtung zunächst zu einer Längung des Kuppelseils führt, bevor dieses im dann gespannten Zustand die Bewegung der zweiten Abdeckvorrichtung auf die erste Abdeckvorrichtung überträgt.

Bei einem Getriebe eines erfindungsgemäßen Kühlsystems mit Kuppelstange(n) und/oder Zugseil(en) können unterschiedliche Bewegungsgeschwindigkeiten der Abdeckvorrichtungen auf konstruktiv einfache und damit vorteilhafte Weise realisiert werden, wenn diese über unterschiedliche Hebel jeweils einer Drehlagerung der Abdeckvorrichtungen zugeordnet sind.

Gemäß einer weiterhin bevorzugten Ausgestaltungsform eines erfindungsgemäßen Kühlsystems kann vorgesehen sein, dass die erste Abdeckvorrichtung und/oder die zweite Abdeckvorrichtung mittels eines Federelements in Richtung der (jeweils) dazugehörigen Verschlussstellung beaufschlagt sind. Dadurch kann die Verwendung eines in konstruktiver Hinsicht besonders einfachen Getriebes ermöglicht werden.

Das Getriebe eines erfindungsgemäßen Kühlsystems kann auch in vorteilhafter Weise als Zahnradgetriebe ausgebildet sein oder ein solches umfassen. Unterschiedliche Zeitpunkte, zu denen in einem Öffnungsbetrieb des Antriebs die Abdeckvorrichtungen ausgehend von den Verschlussstellungen bewegt werden, können dann beispielsweise dadurch realisiert werden, dass sich ein Zahnrad des Antriebs nur über einen Abschnitt des Umfangs eines Zahnrads, das der ersten Abdeckvorrichtung zugeordnet ist, in einem Verzahnungseingriff mit diesem Zahnrad befindet. Alternativ kann eine erst nach einer definierten Drehung eines dem Antrieb zugeordneten Zahnrads greifende Kupplung eine Drehbewegung dieses Zahnrad auf ein der ersten Abdeckvorrichtung zugeordnetes Zahnrad übertragen. Unterschiedliche Bewegungsgeschwindigkeiten der Abdeckvorrichtungen können bei einem solchen Zahnradgetriebe auf relativ einfache Weise durch entsprechende Übersetzungsverhältnisse von Zahnradpaarungen realisiert werden.

Vorteilhaft umsetzen lässt sich die erfindungsgemäß vorgesehene zeitweise unterschiedliche Abdeckung der Kühlmittelkühler mittels der Abdeckvorrichtungen insbesondere dann, wenn die Kühlmittelkühler nebeneinander und insbesondere in einer für den Betrieb vorgesehenen Ausrichtung des Kühlsystems übereinander angeordnet sind.

Bei einem erfindungsgemäßen Kraftfahrzeuge kann es sich insbesondere um ein radbasiertes und nicht schienengebundenen Kraftfahrzeug (vorzugsweise ein PKW oder ein Lkw) handeln.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.

Die vorliegende Erfindung wird nachfolgend anhand von in den Zeichnungen dargestellten Ausgestaltungsbeispielen näher erläutert. In den Zeichnungen zeigt, jeweils in vereinfachter Darstellung:
- Fig. 1:: ein erfindungsgemäßes Kraftfahrzeug;
- Fig. 2:: ein erfindungsgemäßes Kühlsystem;
- Fig. 3:: zwei Abdeckelemente und ein diese koppelndes Getriebe gemäß einer ersten Ausgestaltungsform;
- Fig. 4:: zwei Abdeckelemente und ein diese koppelndes Getriebe gemäß einer zweiten Ausgestaltungsform; und
- Fig. 5:: zwei Abdeckelemente und ein diese koppelndes Getriebe gemäß einer dritten Ausgestaltungsform.

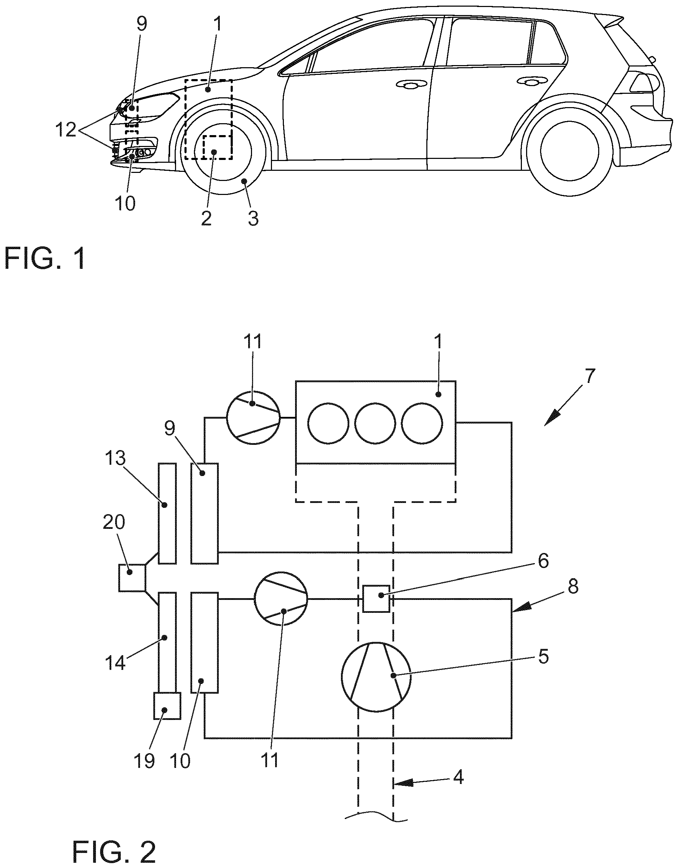

Die Fig. 1 zeigt ein erfindungsgemäßes Kraftfahrzeug. Dieses umfasst einen in einem Motorraum angeordneten Verbrennungsmotor 1, der ein Teil einer Brennkraftmaschine ist. Im Betrieb erzeugt der Verbrennungsmotor 1 Antriebsleistung, die über ein automatisches oder manuelles Schaltgetriebe 2 auf angetriebene Räder 3 des Kraftfahrzeugs übertragbar ist. In einen Frischgasstrang 4 der Brennkraftmaschine ist ein Verdichter 5, der zur Verdichtung von dem Verbrennungsmotor 1 zuzuführendem Frischgas vorgesehen ist, sowie, an einer Position zwischen dem Verdichter 5 und dem Verbrennungsmotor 1, ein Ladeluftkühler 6 integriert. Zur Kühlung u.a. des Verbrennungsmotors 1 sowie der Ladeluft, d.h. des bereits verdichteten Frischgases, mittels des Ladeluftkühlers 4 umfasst das Kraftfahrzeug zudem ein Kühlsystem, das gemäß der Fig. 2 mindestens zwei Kühlkreisanordnungen 7, 8 ausbildet, die voneinander separiert sind und in die jeweils ein Kühlmittelkühler 9, 10, der der Rückkühlung des in der jeweiligen Kühlkreisanordnung 7, 8 mittels einer Kühlmittelpumpe 11 geförderten Kühlmittels dient, integriert ist. In der Fig. 2 sind die Kühlkreisanordnungen 7, 8 stark vereinfacht als jeweils lediglich einen Kühlkreis und die genannten Komponenten umfassend dargestellt. Grundsätzlich können die Kühlkreisanordnungen 7, 8 eines Kühlsystems eines Kraftfahrzeugs jeweils eine Mehrzahl von teilweise ineinander übergehenden Kühlkreisen umfassen, in die zudem eine Vielzahl weiterer zu kühlender Komponenten integriert sein können.

Die Kühlmittelkühler 9, 10 sind übereinander angeordnet beziehungsweise in einer entsprechenden Anordnung in einer Einheit kombiniert und diese sind unmittelbar hinter beziehungsweise neben einem mehrteiligen Kühlerschutzgitter 12, das in die Front des Kraftfahrzeugs integriert ist, angeordnet. Jeweils einem Teil des Kühlerschutzgitters 12 und einem der Kühlmittelkühler 9, 10 ist eine Abdeckvorrichtung 13, 14 zugeordnet, die beispielsweise zwischen dem Kühlerschutzgitter 12 und den Kühlmittelkühlern 9, 10 angeordnet sein können. Die Abdeckvorrichtung 13, 14 können beispielsweise jeweils eine Vielzahl von Jalousielamellen umfassen, die individuell bewegbar und insbesondere drehbar gelagert sind und die jeweils gemeinsam von einem Antrieb bewegt werden können. Dabei können diese zwischen einer Verschlussstellung, in der diese die Durchgangsöffnungen in dem jeweiligen Teil des Kühlerschutzgitters 12 weitestmöglich verschließen und damit den jeweils zugeordneten Kühlmittelkühler 9, 10 abdecken, und einer Öffnungsstellung, in der diese die Durchgangsöffnungen in dem Kühlerschutzgitter 12 und damit auch die zugeordneten Kühlmittelkühler 9, 10 weitestmöglich freigegeben, verstellt werden.

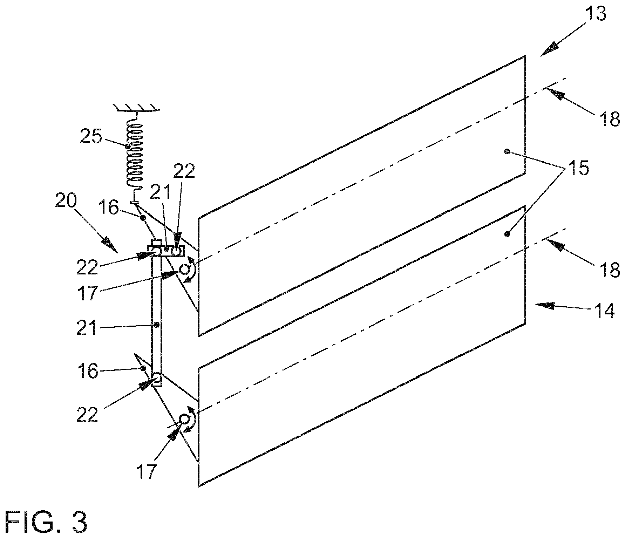

In den Fig. 3 bis 5 sind die Abdeckvorrichtungen 13, 14 jeweils vereinfacht in Form einer einzelnen Jalousielamelle dargestellt. Demnach umfassen diese beziehungsweise jede dazugehörige Jalousielamelle jeweils ein Abdeckelement 15, das, je nach Ausrichtung, eine oder mehrere Durchgangsöffnungen der Kühlerschutzgitter 12 und damit zumindest einen Abschnitt des zugeordneten Kühlmittelkühlers 9, 10 abdeckt, sowie ein sich von einer Seite des Abdeckelements 15 erstreckendes Seitenteil 16, das unter anderem der drehbaren Lagerung des dazugehörigen Abdeckelements 15 dienen. Hierzu bilden die Seitenteile 16 jeweils ein Drehlagerelement 17 aus, das mit einem komplementären Drehlagerelement einer Tragstruktur (nicht dargestellt) des Kraftfahrzeugs zusammenwirkt. Durch eine Drehung der Abdeckelemente 15 um eine durch die Drehlagerelemente definierte Drehachse 18 können diese von der in den Fig. 3 bis 5 dargestellten Verschlussstellungen der Abdeckvorrichtungen 13, 14, in der die Abdeckelemente 15 beispielsweise senkrecht innerhalb des Motorraums des Kraftfahrzeugs ausgerichtet sind, in eine Freigabestellung bewegt werden, in der diese beispielsweise horizontal innerhalb des Motorraums ausgerichtet sind.

Eine Bewegung der Abdeckvorrichtungen 13 ,14 wird mittels eines Antriebs 19 realisiert, der beispielsweise einen Elektromotor (nicht dargestellt) umfasst, der direkt oder unter Zwischenschaltung eines Untersetzungsgetriebes (nicht dargestellt) auf das Drehlagerelement 17 der zweiten Abdeckvorrichtung 14 wirken kann. Eine Bewegung der zweiten Abdeckvorrichtung 14 wird dann zumindest zeitweise mittels eines Getriebes 20 auf die erste Abdeckvorrichtung 13 übertragen.

Bei der in der Fig. 3 dargestellten Ausgestaltungsform umfasst das Getriebe 20 zwei Kuppelstangen 21, die jeweils im Bereich eines ihrer Enden drehbar um eine Achse, die parallel zu den Drehachsen 18 der Abdeckvorrichtungen 13, 14 ausgerichtet ist, miteinander verbunden sind. Mit den jeweiligen anderen Enden sind die Kuppelstangen 21 drehbar um Achsen, die wiederum parallel zu den Drehachsen der Abdeckvorrichtungen ausgerichtet sind, jeweils mit dem Seitenteil 16 einer der Abdeckvorrichtungen 13, 14 verbunden. Dabei sind die Drehlagerstellen 22, die die Abdeckvorrichtungen 13, 14 jeweils mit einer der Kuppelstangen 21 ausbilden, in unterschiedlichen Entfernungen von der Drehachse 18 der jeweils zugehörigen Abdeckvorrichtung 13 ,14 angeordnet. Konkret ist diese Entfernung bei der ersten Abdeckvorrichtung 13 kleiner als bei der zweiten Abdeckvorrichtung 14. Die Kuppelstangen 21 sind demnach über unterschiedliche Hebel jeweils einer Drehlagerung der Abdeckvorrichtungen 13, 14 zugeordnet. In den Verschlussstellungen der Abdeckvorrichtungen 13, 14, wie sie in der Fig. 3 gezeigt sind, sind die Kuppelstangen 21 beziehungsweise ihre Längsachsen nicht parallel sondern in einem Winkel von beispielsweise ca. 90° zueinander ausgerichtet. Eine durch den Antrieb 19 bewirkte Bewegung der zweiten Abdeckvorrichtung 14, durch die das dazugehörige Abdeckelement 15 nach oben verschwenkt wird, führt daher zunächst zu einem Verdrehen der Kuppelstangen 21 um die von diesen ausgebildeten Drehlagerstellen 22, bis diese in eine zueinander parallele Ausrichtung gebracht sind. Anschließend wirken die beiden Kuppelstangen 21 als Zugstangen, durch die dann eine weitergehende Bewegung der zweiten Abdeckvorrichtung 14 auf die erste Abdeckvorrichtung 13 übertragen wird. Diese wird dann gleichfalls in Richtung ihrer Öffnungsstellung verschwenkt. Durch den kleineren Abstand zwischen der Drehlagerstelle 22, die die erste Abdeckvorrichtung 13 mit der dieser zugeordneten Kuppelstange 21 ausbildet, und der Drehachse 18 der ersten Abdeckvorrichtung 13 im Vergleich zu dem Abstand zwischen der Drehlagerstelle 22, den die zweite Abdeckvorrichtung 14 mit der zugeordneten Kuppelstange 21 ausbildet, und der Drehachse 18 der zweiten Abdeckvorrichtung14, ist dann die Bewegungs- beziehungsweise Drehgeschwindigkeit der ersten Abdeckvorrichtung 13 größer als die der zweiten Abdeckvorrichtung 14. Dadurch kann erreicht werden, dass beide der Abdeckvorrichtungen 13, 14 zeitgleich und nach einem im Wesentlichen identischen Drehwinkel ihre jeweilige Öffnungsstellung erreichen.

Bei einem Schließbetrieb des Antriebs, d.h. wenn die zweite Abdeckvorrichtung 14 mittels des Antriebs 19 in Richtung ihrer Verschlussstellung bewegt wird, folgt die erste Abdeckvorrichtung 13 dieser Schließbewegung der zweiten Abdeckvorrichtung 14 mit wiederum einer größeren Bewegungsgeschwindigkeit. Das für diese Schließbewegung der ersten Abdeckvorrichtung 13 erforderliche Moment um die zugehörige Drehachse 18 kann dabei insbesondere schwerkraftbedingt, d.h. durch eine entsprechende Massenverteilung der ersten Abdeckvorrichtung 13, und/oder mittels eines nicht dargestellten Federelements 23 aufgebracht werden.

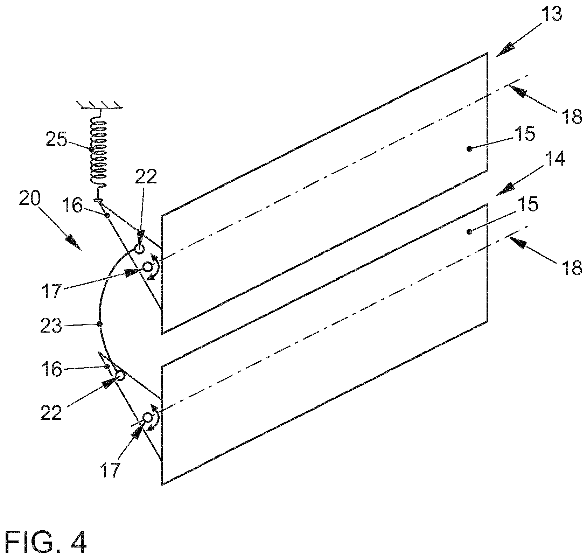

Bei der in der Fig. 4 dargestellten Ausgestaltungsform umfasst das Getriebe 20 anstelle der zwei Kuppelstangen 21 ein Kuppelseil 23, das an Drehlagerstellen 22 mit jeweils dem Seitenteil 16 der Abdeckvorrichtungen 13 ,14 verbunden ist. Befinden sich die Abdeckvorrichtungen 13, 14 in den Verschlussstellungen, liegt das Kuppelseil 23 im ungespannten Zustand vor, in dem dieses in einem Bogen geführt ist (vgl. Fig. 4). Wird die zweite Abdeckvorrichtung 14 nun mittels des Antriebs 19 in Richtung ihrer Öffnungsstellung bewegt, wird das Kuppelseil 23 zunächst, in Analogie zu der parallelen Ausrichtung der Kuppelstangen 21 bei der Ausgestaltung gemäß der Fig. 3, in einen geraden Verlauf gebracht und damit gespannt, bevor dieses die Bewegung der zweiten Abdeckvorrichtung 14 auf die erste Abdeckvorrichtung 13 überträgt.

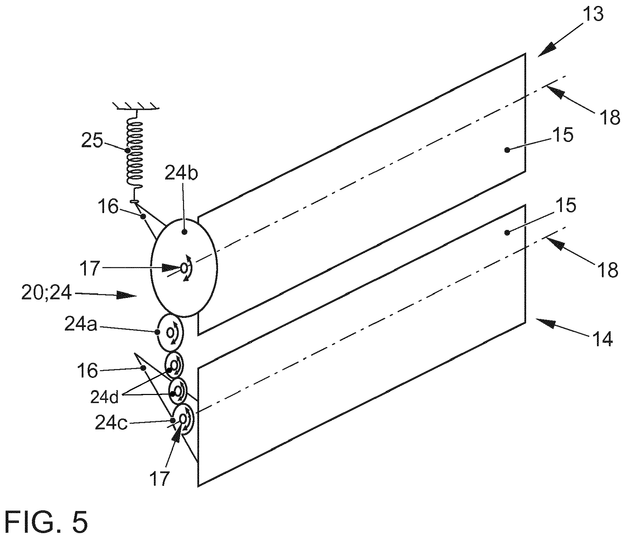

Bei der in der Fig. 5 dargestellten Ausgestaltungsform umfasst das Getriebe 20 ein Zahnradgetriebe. Ein mit einer Abtriebswelle des Antriebs 19 verbundenes Zahnrad 24a greift dabei direkt in ein Zahnrad 24b ein, das mit dem die Drehachse 18 definierenden Drehlagerelement 15 der ersten Abdeckvorrichtung 13 drehfest verbunden ist. Ein mit dem die Drehachse 18 definierenden Drehlagerelement 15 der zweiten Abdeckvorrichtung 14 drehfest verbundenes Zahnrad 24c ist dagegen über zwei Zwischenzahnräder 24d mit dem Zahnrad 24a des Antriebs 19 verbunden. Eine Drehbewegung des Antriebs 19 wird folglich in unterschiedlicher Weise auf die Zahnräder 24b, 24c der Abdeckvorrichtungen 13, 14 übersetzt, wodurch eine schnellere Bewegung der zweiten Abdeckvorrichtung 14 im Vergleich zu der ersten Abdeckvorrichtung 14 realisiert wird. Und trotz dieser Ausgestaltung des Getriebes 20 zu erreichen, dass beide Abdeckvorrichtungen 13, 14 zwischen den jeweiligen Verschluss- und Öffnungsstellungen über den gleichen Winkel verschwenkt werden und somit in gleichem Ausmaß die zugeordneten Kühlmittelkühler 9, 10 beziehungsweise die Durchgangsöffnungen in den Kühlerschutzgittern 12 abdecken und freigegeben, kann vorgesehen sein, dass das Drehlagerelement 17 der zweiten Abdeckvorrichtung 14 über eine Rutschkupplung (nicht dargestellt) mit dem dazugehörigen Zahnrad 24c verbunden ist. Diese rutscht durch, wenn die zweite Abdeckvorrichtung 14 bereits mittels des Antriebs 19 in die Öffnungs- oder Verschlussstellung bewegt wurde (beispielsweise aufgrund eines Anschlags nicht weiterbewegt werden kann) und anschließend mittels eines weitergehenden Betriebs des Antriebs auch noch die sich langsamer bewegende erste Abdeckvorrichtung 13 in die entsprechende Öffnungs-oder Verschlussstellung bewegt wird.

### BEZUGSZEICHENLISTE

- 1: Verbrennungsmotor
- 2: Schaltgetriebe
- 3: Rad
- 4: Frischgasstrang
- 5: Verdichter
- 6: Ladeluftkühler
- 7: erste Kühlkreisanordnung
- 8: zweite Kühlkreisanordnung
- 9: erster Kühlmittelkühler
- 10: zweiter Kühlmittelkühler
- 11: Kühlmittelpumpe
- 12: Kühlerschutzgitter
- 13: erste Abdeckvorrichtung
- 14: zweite Abdeckvorrichtung
- 15: Abdeckelement einer Abdeckvorrichtung
- 16: Seitenteil einer Abdeckvorrichtung
- 17: Drehlagerelement einer Abdeckvorrichtung
- 18: Drehachse einer Abdeckvorrichtung
- 19: Antrieb
- 20: Getriebe
- 21: Kuppelstange
- 22: Drehlagerstelle
- 23: Kuppelseil
- 24: Zahnradgetriebe
- 24a: Zahnrad des Antriebs
- 24b: Zahnrad der ersten Abdeckvorrichtung
- 24c: Zahnrad der zweiten Abdeckvorrichtung
- 24d: Zwischenzahnrad
- 25: Federelement

## Patentansprüche

1. Kühlsystem für ein Kraftfahrzeug, das eine erste Kühlkreisanordnung (7), die einen ersten Kühlmittelkühler (9) umfasst, und eine zweite Kühlkreisanordnung (8), die einen zweiten Kühlmittelkühler (10) umfasst, aufweist, wobei eine Kühlluftzufuhr zu dem ersten Kühlmittelkühler (9) mittels einer ersten Abdeckvorrichtung (13) und eine Kühlluftzufuhr zu dem zweiten Kühlmittelkühler (10) mittels einer zweiten Abdeckvorrichtung (14) veränderbar ist, **dadurch gekennzeichnet, dass** die erste Abdeckvorrichtung (13) und die zweite Abdeckvorrichtung (14) unter Zwischenschaltung eines Getriebes (20) von einem gemeinsamen Antrieb (19) bewegbar sind, wobei das Getriebe (20) derart ausgebildet ist, dass bei einem Öffnungsbetrieb des Antriebs (19) die zweite Abdeckvorrichtung (14) früher und/oder schneller als die erste Abdeckvorrichtung (13) von einer Verschlussstellung in Richtung einer Öffnungsstellung bewegt wird.

2. Kühlsystem gemäß Anspruch 1, **dadurch gekennzeichnet, dass** die erste Kühlkreisanordnung (7) einen Verbrennungsmotor (1) und/oder die zweite Kühlkreisanordnung (8) einen Ladeluftkühler (6) umfasst.

3. Kühlsystem gemäß Anspruch 1 oder 2, **dadurch gekennzeichnet, dass** die Abdeckvorrichtungen (13, 14) jeweils zwischen der Verschlussstellung und der Öffnungsstellung über dieselbe Distanz bewegbar sind.

4. Kühlsystem gemäß einem der vorhergehenden Ansprüche, **dadurch gekennzeichnet, dass** das Getriebe (20) derart ausgebildet ist, dass bei einem Öffnungsbetrieb des Antriebs (19) die zweite Abdeckvorrichtung (14) früher als die erste Abdeckvorrichtung (13) von der Verschlussstellung in Richtung der Öffnungsstellung bewegt wird, wobei die Geschwindigkeit der Öffnungsbewegung der ersten Abdeckvorrichtung (14) dann größer als die Geschwindigkeit der Öffnungsbewegung der zweiten Abdeckvorrichtung (13) ist.

5. Kühlsystem gemäß einem der vorhergehenden Ansprüche, **dadurch gekennzeichnet, dass** das Getriebe (20) derart ausgebildet ist, dass bei einem Öffnungsbetrieb des Antriebs (19) die zweite Abdeckvorrichtung (14) ihre Öffnungsstellung früher als die erste Abdeckvorrichtung (13) erreicht.

6. Kühlsystem gemäß einem der vorhergehenden Ansprüche, **dadurch gekennzeichnet, dass** das Getriebe (20) eine oder mehrere Kuppelstangen (21) und/oder ein oder mehrere Kuppelseile (23) umfasst.

7. Kühlsystem gemäß Anspruch 6, **dadurch gekennzeichnet, dass** das/die Kuppelstange(n) (21) und/oder das/die Kuppelseil(e) (23) über unterschiedliche Hebel jeweils einer Drehlagerung der Abdeckvorrichtungen (13, 14) zugeordnet sind.

8. Kühlsystem gemäß Anspruch 6 oder 7, **dadurch gekennzeichnet, dass**
- mindestens zwei Kuppelstangen (21) vorgesehen sind, die drehbar miteinander verbunden sind, wobei die Kuppelstangen (21) in den Verschlussstellungen der Abdeckvorrichtungen (13, 14) nicht parallel ausgerichtet sind und/oder
- die oder zumindest eine der Kuppelstangen (21) teleskopierbar ist und/oder
- das Zugseil (23) in den Verschlussstellungen der Abdeckvorrichtungen (13, 14) ungespannt zwischen zwei Anlenkstellen verläuft.

9. Kühlsystem gemäß einem der vorhergehenden Ansprüche, **dadurch gekennzeichnet, dass** die erste Abdeckvorrichtung (13) und/oder die zweite Abdeckvorrichtung (14) mittels eines Federelements (25) in Richtung der Verschlussstellung(en) beaufschlagt ist/sind.

10. Kühlsystem gemäß einem der vorhergehenden Ansprüche, **dadurch gekennzeichnet, dass** das Getriebe (20) als Zahnradgetriebe (24) ausgebildet ist oder ein solches umfasst.

11. Kraftfahrzeug mit einem Kühlsystem gemäß einem der vorhergehenden Ansprüche, wobei die Kühlmittelkühler (9, 10) hinter einem Kühlerschutzgitter (12) angeordnet sind und wobei Durchgangsöffnungen des Kühlerschutzgitters (12) mittels der Abdeckvorrichtungen (13, 14) verschließbar sind.
